# EUROPEAN PATENT SPECIFICATION

(11) **EP 0 470 195 B1**
(45) Date of publication and mention of the grant of the patent: **19.07.1995**
(21) Application number: 90908098.8
(22) Date of filing: 06.04.1990
(51) Int. Cl.: B23D 55/10, B27B 13/08

(54) **A METHOD AND AN ARRANGEMENT FOR CONTROLLING THE TENSION OF A BAND SAW-BLADE**
VERFAHREN UND ANORDNUNG ZUR REGELUNG DER SPANNUNG EINES SÄGEBLATTES
PROCEDE ET ARRANGEMENT POUR CONTROLER LA TENSION D'UNE LAME DE SCIE A RUBAN

(30) Priority: 17.04.1989 SE 8901381
(43) Date of publication of application: 12.02.1992
(73) Proprietor: AB A K ERIKSSON, 570 30 Mariannelund (SE)
(72) Inventor: JANSON, Kurt, S-570 30 Mariannelund (SE); LÖNNAS, Bertil, S-570 30 Mariannelund (SE)
(74) Representative: Axelsson, Rolf
(86) International application number: SE9000240
(87) International publication number: WO9012669

(56) References cited:
- GB-A- 2 180 439
- US-A- 3 680 421
- PATENT ABSTRACTS OF JAPAN, vol. 8, no. 108 (M297), abstract of JP 59-19629, publ. 1984-02-01 (AMADA K.K.)

## Description

The present invention relates to a method of controlling the tension of the sawblading of a bandsaw with the aid of an electrically controllable blade-tensioning device by means of which the sawblading can be stretched so as to adjust the blading to a desired tension. The invention also relates to a device for carrying out the method.

When sawing timber into planks and boards with the aid of bandsaws, the sawblading is normally set to saw over-dimensioned pieces of timber in order to compensate for inaccuracies occurring in the actual sawing operation. Sawing can be achieved with a high degree of precision, provided that the teeth of the sawblading are sharp, deviations in accuracy will occur as the sharpness of the teeth decreases. The sawblading is normally tensioned so as to be flexible, wherewith endeavours are made, inter alia, to reduce the aforesaid deviations, by lowering the infeed speed and therewith reduce the forces transmitted through the teeth on the sawblading during a sawing operation.

JP-A-5919629 shows a method and device for correcting cutting warp in band saw machine, in which when the warp grows to a certain allowable limit, mechanical means are able to provide a correction of the tension of the blade. In this document, no micro processor is used and only one parameter is taken into consideration for correction.

A prime object of the present invention is to increase sawing accuracy while retaining a desired high infeed speed, and to maintain or prolong the useful life of a sawblading, by optimizing blade-tension with each sawing occasion.

This is achieved by increasing blade-tension instead of lowering the infeed speed when there is a tendency towards deviations in a sawing operation, since such an increase is found to improve the sawing accuracy of the blade. When this higher blade-tension is no longer required, the blade is relaxed towards its original starting or basic tension, thereby preventing the blade from being subjected to unnecessary loads liable to reduce the useful lifespan of the blade.

One prerequisite in this respect is that the saw is equipped with a sawblading tensioning arrangement whose power output can be controlled in a rational manner with the aid of electronic pulses. Present day micro processors can be used to control proportionally both the gas pressure and hydraulic pressure of known blade-tensioning devices, for instance devices of the kind described and illustrated in Swedish Patent Specification 7312757-3 and in WO 88/03850.

Thus, in order to achieve the aforesaid objects with the aid of a blade-tensioning device of the kind taught, for instance, by one of the aforesaid patent specifications, it is necessary to select on each occasion an optimum blade-tensioning level which will provide an accurate sawcut without the occurrence of problems in the form of fatique cracks in the sawblading.

Stresses in the saw blade or blading are mainly in the form of the tensile stress created by the tension force in the cross-section of the saw blade and by the bending tension occurring as the blading bends around the saw pulleys or wheels. In addition to these stresses, stresses are also created in the blading in conjunction with sharpening the teeth by grinding.

During sawing action, the sawblading is also subjected to external forces, such as to the effect of the cutting force on the tips of the sawteeth, to the effects of thermal loads and vibrations, and to the effects of torsional and lateral loads caused by the blading itself or because the workpiece moves laterally.

The following measures are examples of those measures which can be taken for the purpose of achieving optimum blading-tension values and of improving sawing accuracy.

The specific blading-tension can be calculated and used for control purposes, on the basis of a sensed cross-sectional area of the blading which is changed inter alia each time the sawblading is ground, and on the basis of the tensioning force in the blading. Contact-less inductive sensors can be used to detect momentary disturbances in or deviations from the intended movement path of the blading caused, for instance, by heating of the blading, vibrations generated therein or lateral loads thereon, the signals from said sensors being registered and utilized to initiate increased tensioning of the sawblading. Variations in the pressure exerted by the sawblading on the blading guides can also be sensed and recorded, for the same reason.

Elevated stresses in the tips of the teeth of sawblading, caused by blunting of said tips, result in greater inaccuracies in the saw cut.

This can be monitored with the aid of known image processing apparatus constructed to produce signals corresponding to deviations from an imaginary saw cut. Among other things, this will enable the saw to be operated at relatively low blading-tension provided that the sawblading is sharp, among other things in order to avoid unnecessary loading of the sawblading, this tension being gradually increased in a manner to maintain sawing accuracy as the sharpness of the sawteeth decreases.

Sensing and calculating devices intended, inter alia, for sensing and calculating the aforesaid parameters can be employed to achieve substantially optimum blading-tension with each sawing operation, wherein attention is paid, inter alia, to the specific tension in the sawblading, the sharpness of the sawteeth, the hardness of the wood being sawn, etc.

By permitting the blading-tension to return towards a starting value upon completion of each sawing operation, for instance subsequent to sawing each log, there is afforded the advantage that the tension in the blading will not remain at a high value, e.g. a value determined by a log containing a very large number of knots, when such high tension levels are not required for sawing a following log, e.g. a log which comprises a far less dense type of wood.

Consequently, in accordance with the present invention, a method of the kind described in the opening paragraph is mainly characterized by the steps of determining during a sawing operation, with the aid of automatically operating means, whether the blading-tension is optimum or not; determining said tension by sensing and determining at least two mutually different parameters drawn from specific blading-tension, disturbances in the pattern of blading movement, saw-cut linearity; processing electrical signals corresponding to said parameters in a microprocessor, when deviations from parameter limit values programmed in the microprocessor or fluctuations in the parameters are established, transmitting control signals from said microprocessor to the blading-tensioning device such as to adjust the blading-tension; determining by means of said automatically operating means when the blading-tension is optimum; and terminating the control signals to the blading-tensioning device when optimum blading-tension is established.

The method will therewith enable the tension in the sawblading to be maintained at an optimum level for the sawing process concerned and to be adjusted continuously in response to changed conditions.

The microprocessor will preferably be programmed to cause the blading-tension to return towards a starting value prior to commencing each new sawing operation. This will guarantee, inter alia, that the requisite blading-tension is re-set when commencing to saw each log, thereby eliminating the risk of the saw being operated with an unnecessarily high blading-tension.

The starting value towards which the blading-tension is returned at the end of each sawing operation can be increased progressively with the time over which sawblading is used, thereby avoiding the need to make unnecessarily high adjustments to blading-tension at infrequent intervals.

The main characteristic features of apparatus constructed to operate in accordance with the inventive method are set forth in the following apparatus claims.

The invention will now be described in more detail with reference to exemplifying embodiments illustrated in the accompanying drawings.

Figure 1 illustrates schematically an installation which includes two mutually cooperating bandsaws provided with means for controlling blading-tension in accordance with the invention.

Figure 2 is a schematic, horizontal view of the installation illustrated in Figure 1.

Figure 3 is a schematic side view of one bandsaw illustrated in Figure 1.

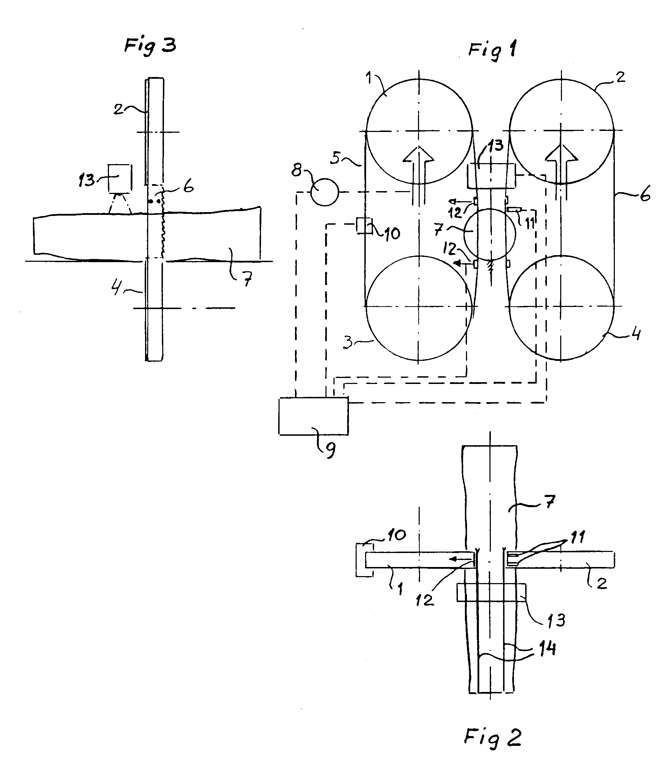

The reference numerals 1, 2 and 3, 4 in Figure 1 identify respectively the upper and the lower saw pulleys or wheels of two bandsaws. A respective sawblading 5 and 6 runs over each pair of pulleys and is stretched until the desired tension is achieved in the sawblading. Stretching of the sawblading is effected by subjecting the upper saw pulleys 1, 2 to a force F with the aid of a hydraulic piston-cylinder device or like device mounted on the saw frame. The tensioned sawblading will preferably be slightly resilient or springy, so as to reduce loading shocks.

Since the bandsaws and the manner of their construction may have any prior known form which will enable the blading-tention to be adjusted, the bandsaws and their construction will not be described in detail here. Examples of bandsaws of this kind are found described and illustrated in the aforesaid specifications, namely the Swedish Patent Specification 7312757-3 and WO 88/03850.

The reference numeral 7 identifies a log being sawn, whereas the reference numeral 8 identifies a device for sensing and adjusting the tensioning force F, this device being connected to a microprocessor 9. The microprocessor also receives signals from a sensing device 10 operative to sense the sawblading area and a device 11 which is operative to detect any disturbance in or deviation from the ideal movement path of the sawblading, for instance disturbances in the form of vibrations, twists and the like. As illustrated schematically in Figure 2, the devices 11 may consist of two inductive sensors each located on a respective edge of the sawblading but out of mechanical contact therewith. The pressure exerted by a tensioned sawblading against blading guides 12 can also be detected or sensed, inter alia, for the purpose of indicating fluctuations in said pressure. The reference 13 identifies a sensing arrangement of the video-camera type which is used to determine the linearity of the saw cut 14 and deviations of the saw cuts from ideal saw cuts.

Although the sensing devices have only been shown in respect of one bandsaw, it will be understood that normally both saws will be provided with mutually the same devices.

When using equipment according to the aforegoing, the microprocessor 9 receives data relating to, inter alia, possible fluctuations in the abutment pressure of the blading against the blading guides and possible twisting of or vibrations in the blading, and also data relating to the accuracy of the saw cut, or calculates such data on the basis of sensed measuring values, inter alia on the values of specific blading-tension. The microprocessor compares these parameters with limit values stored in the microprocessor, and when necessary sends a signal to the blading-tension adjusting device 8, indicating that the tension in the sawblading should be increased, in order to eliminate a particular disturbance or to improve sawing accuracy.

Thus, in accordance with the aforegoing, the tension in the sawblading is adjusted, inter alia, in accordance with the logs concerned and the prevailing sharpness of the sawteeth. When sawing of a log is completed and the sawblading idles for a short period of time, the tension in the sawblading is returned towards a preset starting value. When sawing of the next log commences, the tension in the sawblading is again adjusted by application of the tensioning force F in dependence on the conditions which prevail in respect of this particular log. Thus, the tension in the sawblading is adjusted individually with each log and within limits which considerably optimize the accuracy of the saw cut and the useful length of life of the sawblading.

The microprocessor 9 is preferably programmed to vary the basic level to which the sawblading is tensioned, so that the degree of tensioning is increased slightly with time during the use of the sawblading. This increase in blading-tension shall be based on the knowledge, gained by experience, of the extent to which blading-tension must be increased in order to maintain the desired sawing accuracy as the sawteeth lose their sharpness. The base value or starting value can also be preset with respect, e.g., to the dimensions of the logs or wood being sawn.

The microprocessor can also be used to store data relating to the loading and operating time of the sawblading, the total load to which the sawblading is subjected being compared with an experience-value stored in the microprocessor and the microprocessor being programmed to indicate when sawblading should be replaced even when the sharpness of the sawteeth is satisfactory.

It will be understood that the invention is not limited to the aforedescribed and illustrated bandsaw arrangement and that modifications can be made within the scope of the following claims.

## Claims

1. A method for controlling the tension in the sawblading of a bandsaw with the aid of an electrically adjustable blading-tensioning device by means of which the blading can be stretched so as to adjust the blading-tension, **characterized** by the steps of determining during a sawing operation, with the aid of automatically operating means, whether the blading-tension is optimum or not; determining said tension by sensing and determining at least two mutually different parameters, drawn from specific blading-tension, disturbances in the pattern of blading movement, saw cut linearity; processing electrical signals corresponding to said parameters in a microprocessor, when deviations from parameter limit values programmed in the microprocessor or fluctuations in the parameters are established, transmitting control signals from said microprocessor to the blading-tensioning device such as to adjust the blading-tension; determing by means of said automatically operating means when the blading-tension is optimum; and terminating the control signals to the blading-tensioning device when optimum blading-tension is established.

2. A method according to Claim 1, **characterized** by adjusting the tension of the sawblading automatically in dependence on the cross-sectional area of the sawblading in use at that time.

3. A method according to Claim 1 or 2, **characterized** by returning the blading-tension to a basic starting value prior to commencing each new sawing operation, with the aid of said microprocessor.

4. A method according to Claim 3, **characterized** by increasing the basic value of said blading-tension in correspondence with the time over which said sawblading is used.

5. A device for controlling the tension in the sawblading (5, 6) of a bandsaw with the aid of an electrically controllable blading-tensioning arrangement by means of which the blading can be stretched to adjust blading-tension to a desired level, **characterized** in that the device includes sensor means (10-13) operative to sense and determine at least two different parameters during a sawing operation drawn from specific blading-tension, disturbances in the ideal movement pattern of the blading, the linearity of the saw cut; in that the device also includes a microprocessor (9) which is supplied with electric signals corresponding to said parameters and which when establishing deviations from limit values relating to said parameters programmed in the microprocessor or fluctuations in the parameters is operative to send control signals to the blading-tensioning arrangement such as to produce a smooth or continuous change in said blading-tension until said parameters again fall within said limit values.

## Patentansprüche

1. Verfahren zum Steuern der Spannung des Sägeblattes einer Bandsäge mittels einer einstellbaren elektrischen Blattspannvorrichtung, mittels der das Blatt gedehnt werden kann, um so die Blattspannung einzustellen, gekennzeichnet durch die Schritte
des Bestimmens während eines Sägevorganges mittels einer automatischen Betätigungseinrichtung, ob die Blattspannung optimal ist oder nicht;
des Bestimmens der Spannung durch Erfassen und Bestimmen von mindestens zwei jeweils verschiedenen Parametern, die aus der spezifischen Blattspannung, den Störungen des Musters der Blattbewegung, der Sägeschnittlinearität gewonnen werden;
des Verarbeitens elektrischer Signale, die den Parametern in einem Mikroprozessor entsprechen, wenn Abweichungen von Parametergrenzwerten, die in dem Mikroprozessor programmiert sind, oder Fluktuationen in den Parametern aufgestellt werden,
des Übertragens von Steuersignalen von dem Mikroprozessor an die Blattspannvorrichtung derart, daß die Blattspannung eingestellt wird; des Bestimmens mittels der automatischen Betätigungseinrichtung, wenn die Blattspannung optimal ist, und
des Beendens der Steuersignale für die Blattspannvorrichtung, wenn eine optimale Blattspannung erstellt ist.

2. Verfahren nach Anspruch 1, gekennzeichnet durch ein automatisches Einstellen der Spannung des Sägeblattes in Abhängigkeit von der Querschnittsfläche des Sägeblattes im Gebrauch zu diesem Zeitpunkt.

3. Verfahren nach Anspruch 1 oder 2, gekennzeichnet durch Rückführen der Blattspannung auf einen Grundanfangswert vor einem Einsetzen jedes neuen Sägevorganges, und zwar mittels des Mikroprozessors.

4. Verfahren nach Anspruch 3, gekennzeichnet durch ein Erhöhen des Grundwertes der Blattspannung gemäß der Zeit, während der das Sägeblatt verwendet wird.

5. Vorrichtung zum Steuern der Spannung in dem Sägeblatt (5, 6) einer Bandsäge mittels einer elektrisch steuerbaren Blattspannanordnung, mittels der das Blatt gedehnt werden kann, um eine Blattspannung auf ein gewünschtes Niveau einzustellen, dadurch gekennzeichnet, daß
die Vorrichtung eine Sensoreinrichtung (10-13) aufweist, die so arbeitet, daß sie zumindest zwei unterschiedliche Parameter während eines Sägevorganges erkennt und bestimmt, welche aus der spezifischen Blattspannung, Störungen des idealen Bewegungsmusters des Blattes, der Linearität des Sägeschnittes gewonnen werden, dahingehend, daß die Vorrichtung auch einen Mikroprozessor (9) aufweist, der mit elektrischen Signalen entsprechend den Parametern versorgt wird und der, wenn er Abweichungen von Grenzwerten bezüglich dieser in dem Mikroprozessor programmierten Parametern oder der Schwankungen in den Parametern erstellt, so arbeitet, daß er Steuersignale an die Blattspannanordnung derart aussendet, daß eine sanfte oder kontinuierliche Änderung in der Blattspannung erzeugt wird, bis diese Parameter wiederum innerhalb der Grenzwerte fallen.

## Revendications

1. Procédé de commande de la tension exercée sur la lame d'une scie à ruban à l'aide d'un dispositif de tension de lame pouvant être réglé électriquement, au moyen duquel la lame peut être tendue afin de régler la tension de la lame, **caractérisé** par les étapes de :
- détermination au cours d'une opération de sciage, à l'aide de moyens d'actionnement automatiques, si la tension de lame est optimale ou non ;
- détermination de ladite tension en détectant et déterminant au moins deux paramètres différents l'un de l'autre, déduits de la contrainte par unité de surface de la lame, des perturbations se produisant dans la trajectoire de déplacement de la lame, de la linéarité du trait de scie ;
- traitement de signaux électriques qui correspondent auxdits paramètres dans un microprocesseur lorsque des écarts par rapport aux valeurs limites de paramètres programmées dans le microprocesseur ou des variations de paramètres sont déterminés, par transmission de signaux de commande depuis ledit microprocesseur vers le dispositif de tension de lame afin de régler la tension de lame ;
- détermination au moyen desdits moyens d'actionnement automatiques du moment où la tension de lame est optimale ; et
- cessation des signaux de commande transmis au dispositif de tension de lame lorsqu'une tension de lame optimale est établie.

2. Procédé selon la revendication 1, **caractérisé** par le réglage automatique de la tension de la lame de scie par rapport à la superficie en coupe de la lame en service à ce moment-là.

3. Procédé selon les revendications 1 ou 2, **caractérisé** par le fait que la tension de lame est ramenée à une valeur initiale de base avant d'entreprendre chaque nouvelle opération de sciage, à l'aide dudit microprocesseur.

4. Procédé selon la revendication 3, **caractérisé** par l'accroissement de la valeur de base de ladite tension de lame en fonction du temps pendant lequel ladite lame de scie est utilisée.

5. Dispositif destiné à commander la tension exercée sur les lames (5, 6) d'une scie à ruban à l'aide d'un dispositif de tension de lames à commande électrique au moyen duquel les lames peuvent être tendues pour régler la tension des lames à un niveau souhaité, **caractérisé** en ce que :
- le dispositif comprend des moyens capteurs (10 à 13) dont la fonction est de détecter et déterminer au moins deux paramètres différents au cours d'une opération de sciage, et déduits de la contrainte par unité de surface des lames, des perturbations se produisant dans la trajectoire idéale de déplacement des lames, de la linéarité du trait de scie ;
- le dispositif comprend également un microprocesseur (9) qui est alimenté en signaux électriques correspondant auxdits paramètres et qui, lors de la détermination d'écarts par rapport à des valeurs limites relatives auxdits paramètres programmés dans le microprocesseur ou à des variations des paramètres, agit pour émettre des signaux de commande vers le dispositif de tension des lames afin de produire un changement doux ou continu de ladite tension de lames jusqu'à ce que lesdits paramètres soient ramenées au dessous des valeurs limites.
